**Europäisches Patentamt**

**European Patent Office**

**Office européen des brevets**

(19)

(11) Veröffentlichungsnummer: **0 246 502**
**B1**

## (12) EUROPÄISCHE PATENTSCHRIFT

(45) Veröffentlichungstag der Patentschrift:
27.06.90

(21) Anmeldenummer: 87106635.3

(22) Anmeldetag: 07.05.87

(51) Int. Cl.⁵: **F16G 13/16**

(54) **Energieführungskette.**

(30) Priorität: 23.05.86 DE 3617447

(43) Veröffentlichungstag der Anmeldung:
25.11.87 Patentblatt 87/48

(45) Bekanntmachung des Hinweises auf die Patenterteilung:
27.06.90 Patentblatt 90/26

(84) Benannte Vertragsstaaten:
AT CH DE ES FR GB IT LI SE

(56) Entgegenhaltungen:
DE-A- 1 574 369
DE-A- 2 656 638
DE-A- 3 333 543
FR-A- 2 374 761
US-A- 4 392 344

(73) Patentinhaber: Kabelschlepp Gesellschaft mit beschränkter Haftung, Marienborner Strasse 75, D-5900 Siegen 1(DE)

(72) Erfinder: Moritz, Werner, Wetzlarer Strasse 122, D-5900 Siegen(DE)

(74) Vertreter: Patentanwälte Dipl.-Ing. Alex Stenger Dipl.-Ing. Wolfram Watzke Dipl.-Ing. Heinz J. Ring, Kaiser-Friedrich-Ring 70, D-4000 Düsseldorf 11(DE)

## Beschreibung

Gegenstand der Erfindung ist eine Energieführungskette für die Zufuhr von Verbrauchsmitteln aller Art durch Leitungen von einem ortsfesten Anschluß zu einem beweglichen Verbraucher mit schwenkbar miteinander verbundenen Kettengliedern aus Kettenlaschen und diese verbindenden Stegen, die Innenräume zur Aufnahme der Leitungen abgrenzen, wobei die Schwenkbewegung benachbarter Kettenglieder durch radiale Anschläge begrenzt ist, die in einer Ebene mit entsprechenden Anschlägen benachbarter Kettenglieder schwenkbar sind.

Aus der DE-A 3 333 543 ist ein selbsttragender Energieleitungsträger aus gelenkig miteinander verbundenen Rohrgliedern bekannt, deren Rohrenden mit gegenseitig überlappenden Randabschnitten ineinandergesteckt sind, wobei die Stirnseiten der Rohrglieder zu den Schwenkachsen konzentrische Rotationsflächen bilden. Die Gelenkachsen werden von einseitig abgerundeten Erhebungen auf den Rohrgliedern definiert, welche in entsprechende Ausnehmungen benachbarter Rohrglieder eingreifen und den Schwenkwinkel durch einen länglichen Forsatz begrenzen. Bei diesem Energieleitungsträger müssen die Anschlüsse der Energieleiter gelöst werden, wenn ein defektes Rohrglied ersetzt werden soll. Außerdem ist es bei diesem Energieleitungsträger schwierig, Energieleitungen einzuziehen oder einzelne Energieleiter auszutauschen oder Energieleitung mit festen Armaturen einzulegen. Ein weiterer Nachteil besteht darin, daß die Wandstärke der Rohrglieder relativ groß sein muß, wenn kleine Krümmungsradien verwirklicht werden sollen. Schließlich ist die Flächenpressung auf den Gelenkachsen besonders groß, so daß keine besonders großen Kräfte übertragen werden können.

Aus der US-A 4 392 344 ist eine weitere geschlossene Energieführungskette bekannt, die aus gelenkig miteinander verbundenen, rohrförmigen Kettengliedern besteht. Die Öffnungen zwischen den geschwenkten Kettengliedern werden von eingelegten Blechstreifen abgedeckt. Bei dieser Energieführungskette können keine besonders hohen Kräfte übertragen werden. Außerdem ist der Austausch einzelner Kettenglieder und der Austausch von Energieleitern aufwendig. Schließlich besteht bei der Montage auch Verletzungsgefahr durch die scharfkantigen Blechstreifen.

Davon ausgehend liegt der Erfindung die Aufgabe zugrunde, eine verbesserte Energieführungskette zu schaffen, die hohe Kräfte übertragen kann, umfangsseitig geschlossen ist, eine möglichst glatte Oberfläche aufweist und möglichst einfach montierbar ist.

Eine erste technische Lösung dieser Aufgabe besteht darin, daß die Kettenlaschen randseitig zu den Schwenkachsen konzentrische Ausnehmungen haben, in die außen kreiszylindrische Deckplatten eingesetzt sind, welche Spalte zwischen den Stegen benachbarter Kettenglieder abdecken, daß benachbarte Kettenlaschen durch Deckel verbunden sind, welche seitlich mit einem konzentrischen Rand in die Ausnehmungen und diese miteinander verbindende, gebogene und zu den Schwenkachsen konzentrische Nuten eingreifen und daß die Deckel Vorsprünge haben, die zwischen den Anschlägen benachbarter Kettenglieder angeordnet sind.

Bei einer erfindungsgemäßen Energieführungskette werden die Kettenglieder von den Deckeln zusammengehalten. Dabei können besonders hohe Kräfte übertragen werden, da die Deckel besonders günstig an den Kettengliedern angreifen und konstruktionsbedingt selber eine hohe Festigkeit haben. Wenn die Anschläge benachbarter Kettenlaschen aufeinanderliegen, werden die Kräfte sowohl über die Anschläge, als auch über die Umfangsflächen der Erhebungen und den Rand des Deckels übertragen, was eine erhebliche Festigkeitssteigerung gegenüber den bekannten Energieführungsketten bedeutet. Der Deckel hat aber auch eine Dichtfunktion. Einerseits überdeckt er nämlich die Spalte zwischen den Kettenlaschen, welche insbesondere zwischen den Anschlägen ausgebildet sind. Andererseits überdeckt der Deckel auch die Ausnehmungen in den Kettenlaschen, welche von den Deckplatten meist nur teilweise ausgefüllt werden. Die Deckplatten sind vorzugsweise so bemessen, daß sie den Spalt zwischen benachbarten Kettengliedern in jeder Lage in den Ausnehmungen abdecken, auch wenn der maximale Schwenkwinkel zwischen den Kettengliedern erreicht ist. Die Vorsprünge an den Deckeln liegen zwischen den Anschlägen benachbarter Kettenglieder und begrenzen deren Bewegung, wodurch die Krümmungsradien der Energieführungskette und die Vorspannung zwischen den Kettengliedern auch nachträglich festgelegt bzw. verändert werden können, wobei lediglich verschiedene Deckel zum Einsatz kommen. Die Vorsprünge begrenzen nämlich den Bewegungsbereich der Anschläge und legen somit den maximalen Schwenkwinkel benachbarter Kettenglieder fest. Außerdem zentrieren die Vorsprünge die Deckplatten zwischen den Stegen.

Bei einer praktischen Ausgestaltung dieser Erfindungslösung sind die Erhebungen am Boden eines rückspringenden Abschnittes der Kettelaschen angeordnet, wobei an die konzentrischen Umfangsflächen Nuten zur Aufnahme des Randes der Deckel angrenzen und die Deckel außen bündig mit den Kettenlaschen abschließen. Hierdurch erhält die Energieführungskette auch an den Seiten eine glatte Oberfläche. Die Nuten können so ausgestaltet sein, daß sich die Kettenlaschen beim Schwenken der Kettenglieder mit den Außenflanken der Nut an der Umfangsfläche des Randes des Deckels abstützen.

Zur weiteren praktischen Ausgestaltung überlappen die benachbarten Ketten einander in Überlappungsbereichen und haben die Überlappungsbereiche und die Deckel zu den Schwenkachsen der Kettenglieder konzentrische Bohrungen zur Aufnahme von Verbindungselementen, so daß einerseits die Kettenglieder besonders gut aneinander geführt und angestützt sind und andererseits die Deckel besonders sicher und zugleich einfach mit den Kettengliedern verbunden sind. Insbesondere der Austausch einzelner Kettenglieder ist bei der angegebenen Ausgestaltung auf einfache Weise möglich.

Zur weiteren praktischen Ausgestaltung bilden die Deckel mit den Deckplatten Nut-Feder-Verbindungen, so daß die Deckelplatten in den Ausnehmungen der Kettenlaschen nicht verkanten können. Dies wird insbesondere dann erreicht, wenn die Deckel von den Anschlägen an der Vorsprüngen bewegt werden. Hierdurch können Deckplatten mit relativ geringen Abmessungen zum Einsatz kommen. Zur Verbesserung der Verbindung können die Deckel auch Ränder zur Auflage der Deckplatten haben.

Zur weiteren praktischen Ausgestaltung haben die bei gekrümmter Energieführungskette außen angeordneten Deckplatten einer kreisringausschnittförmigen Querschnitt, so daß große Krümmungsradien auch bei kleinen Wanddicken der Deckplatte realisierbar sind. Die bei gekrümmter Energieführungskette innen angeordnete Deckplatte kann einen kreissegmentförmigen Querschnitt haben, so daß sie praktisch nicht in den Innenraum für die Energieleiter eingreift.

Zur weiteren praktischen Ausgestaltung haben die Kettenglieder ein- oder beidseitig lösbare Stege, die bis zu den Deckplatten reichen, so daß die Energieführungskette einfach geöffnet werden kann und Kettenglieder bzw. Energieleiter auf einfache Weise eingebracht bzw. ausgetauscht werden können.

Zur weiteren praktischen Ausgestaltung haben die Stege Befestigungslaschen, deren Ausnehmungen mit Hinterschneidungen versehen sind, und Aufnahmen zum Einstecken der Befestigungslaschen und weisen die Aufnahmen Querbohrungen auf, in die Befestigungsbolzen eingesetzt sind, über deren abgeflachte Seiten die Befestigungslaschen mit ihren Ausnehmungen schiebbar sind und die nach einer Drehung die Hinterschneidungen in den Befestigungslaschen und Nasen in den Querbohrungen hintergreifen. Hierdurch können die Stege auf einfache Weise formschlüssig mit den Kettenlaschen verbunden werden. Die Befestigungsbolzen können zur Sicherung an ihrem Außenumfang eine Nut haben, in die Nasen am Innenumfang der Querbohrung eingreifen.

Bei einer letzten praktischen Ausgestaltung sind die Befestigungsbolzen an ihren abgeflachten Seiten über die Nasen am Innenumfang der Querbohrungen schiebbar, so daß sie einfach in die Querbohrungen einsetzbar sind. Da die abgeflachten Seiten der Befestigungsbolzen eine Winkelstellung von 45° zur Einführachse der Befestigungslaschen haben, wenn sie über die Nasen verschiebbar sind, sind sie in der Aufnahmestellung und der Verriegelungsstellung unverlierbar mit den Kettenlaschen verbunden.

Eine zweite technische Lösung dieser Aufgabe besteht darin, daß die Kettenglieder mit auf die Stege aufsteckbaren oder von diesen gebildeten Querplatten abgedeckt sind, daß zwischen den Querplatten benachbarter Kettenglieder außen und innen kreiszylindrische Deckplatten eingesetzt sind, die der Abdeckung der Spalte zwischen den Querplatten benachbarter Kettenglieder dienen, wobei die Deckplatten eine konzentrisch zu den Schwenkachsen bzw. Gelenkachsen ausgebildete Krümmung aufweisen und mit radial zu den Gelenkachsen verlaufenden Auflagestützen verbunden sind und daß die Auflagestützen mit einer zentralen Achse in einer Gelenkbohrung der Kettenlaschen gelagert sind.

Bei dieser erfindungsgemäßen Energieführungskette werden die Kettenglieder von ihren Laschen zusammengehalten, die in ihren Schwenkbereichen an einem Ende und auf einer Seite mit von radialen Anschlägen unterbrochenen Ausnehmungen versehen sind und am anderen Ende und auf der gegenüberliegenden Seite mit vorspringenden, radialen Anschlägen versehen sind, die in die zwischen den Anschlägen liegenden Ausnehmungen eines benachbarten Kettengliedes eingreifen können. Bei dieser Gelenkkonstruktion der Kettenlaschen sind die Anschläge innenliegend angeordnet und müssen nicht mehr durch einen Deckel abgedeckt werden. Die Ober- und Unterseiten der Kettenglieder werden mit den auf die Stege aufsteckbaren oder einteilig mit diesen ausgebildeten Querplatten geschlossen. Die zwischen diesen Querplatten liegenden und sich im Krümmungsbereich öffnenden und schließenden Spalte werden mit den kreiszylindrischen Deckplatten geschlossen, die mit ihren Auflagestützen in den Gelenkbohrungen der Kettenlaschen gelagert sind. Diese Erfindungslösung hat den Vorteil einer besonders einfachen und sicheren Konstruktion, deren Einzelteile aus Kunststoff hergestellt und maschinell montiert werden können.

Bei einer praktischen Ausgestaltung sind die Querplatten aus extrudierten Kunststoffprofilen mit angeformten Federzungen zum Aufstecken auf die Stege hergestellt. Auch die Deckplatten können aus extrudierten Kunststoffprofilen mit angeformten Klemmnasen hergestellt sein, so daß beide Konstruktionsteile als Meterware hergestellt und für die Konfektion zu Energieführungsketten unterschiedlicher Breite auf ein definiertes Maß abgeschnitten werden können.

Zur weiteren praktischen Ausgestaltung sind an den Rändern der Querplatten und der Deckplatten sich hintergreifende Anschlagkanten angeformt. Mit diesen Anschlagkanten werden die Deckplatten zwischen den Querplatten zentriert, so daß sich auch bei der Bewegung im Krümmungsbereich keine Spalten öffnen und schließen können.

Zur weiteren praktischen Ausgestaltung werden die Auflagestützen mit einer Schnappachse schwenkbar in den Gelenkbohrungen der Kettenlaschen befestigt. Diese Schnappachse kann gleichzeitig auch die Gelenkachse für benachbarte Kettenglieder bilden.

Die erfindungsgemäße Energieführungskette zeichnet sich in beiden Lösungsvarianten durch einfache Herstellbarkeit und einen hohen Grad an Variabilität aus, wobei sie besonders montage- und servicefreundlich ist, wozu auch ihre Zusammensetzung aus nur wenigen Bauteilen und ihr symmetrischer Aufbau beiträgt.

Aus der FR-A 2 374 761 ist eine Energieführungskette bekannt, bei der zur Abdeckung zwischen den Kettenlaschen starre Elemente mit beidseitig angeformten Zylinderabschnitten vorgesehen sind. Die Verbindung der Abdeckung mit den Kettenlaschen soll durch Verschrauben oder Verschweißen erfolgen, womit eine Schwächung der Stabilität der Kettenglieder verbunden ist. Diese bekannte Konstruktion weist somit ebenfalls die schon beim einleitenden Stand der Technik beschriebenen Nachteile auf.

Ausgehend von diesem Stand der Technik besteht eine dritte technische Lösung der Aufgabe darin, daß die Deckplatten an nur einer Längsseite der Querplatten angeformt sind und daß die Querplatten und Deckplatten aus extrudierten Kunststoffprofilen mit angeformten Federzungen zum Aufstecken auf die Stege oder zwischen diesen angeordneten Trennstegen hergestellt sind. Bei einer praktischen Ausführungsform können an den Kettenlaschen auf der Innenseite Stützleisten für die Deckplatten angeformt sein.

Bei dieser erfindungsgemäßen Energieführungskette werden die Kettenglieder ebenfalls von ihren Laschen zusammengehalten, wie es vorstehend für die zweite technische Lösung beschrieben worden ist. Diese dritte technische Lösung hat jedoch gegenüber der zweiten Erfindungslösung den weiteren Vorteil, daß die Auflagestützen für die Querplatten entfallen können, weil sich die Querplatten mit den angeformten Deckplatten selbst in den Spalten zwischen benachbarten Kettengliedern zentrieren können, wenn wie bei der zweiten technischen Lösung an den freien Rändern der Querplatten und der Deckplattern sich hintergreifende Anschlagkanten angeformt sind. Die vorliegende Erfindungslösung kann aber nur bei Energieführungsketten mit sehr kleinen Kettengliedern und relativ großen Krümmungsradien angewendet werden.

Weitere Einzelheiten und Vorteile des Gegenstandes der Erfindung ergeben sich aus der nachfolgenden Beschreibung der zugehörigen Zeichnungen, die drei bevorzugte Ausführungsformen der erfindungsgemäßen Energieführungskette zeigen. In den Zeichnungen zeigen:

Fig. 1 zwei Kettenglieder der ersten Lösungsvariante als perspektivisches Sprengbild;

Fig. 2 eine schematische Darstellung der Verbindung zwischen zwei Kettenlaschen bei gestreckter Energieführungskette mit vektorieller Darstellung der Richtung der übertragenen Kräfte;

Fig. 3 eine schematische Darstellung der Verbindung zwischen zwei Kettenlaschen bei maximalem Schwenkwinkel mit vektorieller Darstellung der Richtung der übertragenen Kräfte;

Fig. 4a bis 4d eine Befestigung der Stege an den Kettenlaschen ohne Bolzen (4a), mit eingesetztem Bolzen (4b), mit Bolzen in Aufnahmebereitschaft für die Befestigungslaschen (4c) und mit Bolzen in der Verriegelungsstellung (4d) in der Ansicht;

Fig. 5a bis 5d die Befestigung der Stege an den Kettenlaschen entlang der Linie V-V in den Fig. 4a bis 4d geschnitten;

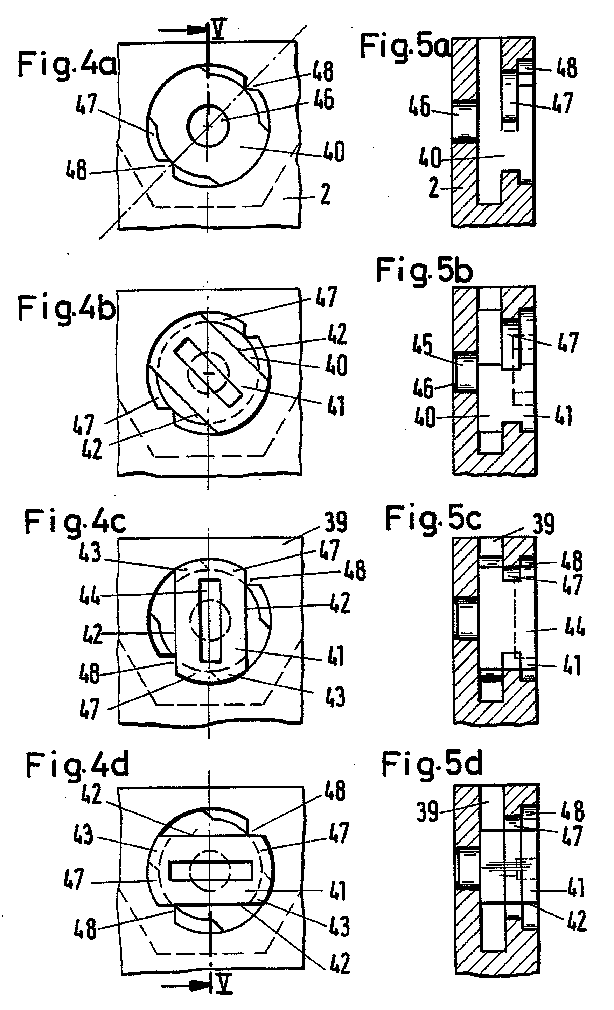

Fig. 5a bis 5d die Befestigung der Stege an den Kettenlaschen entlang der Linie V-V in den Fig. 4a bis 4d geschnitten;

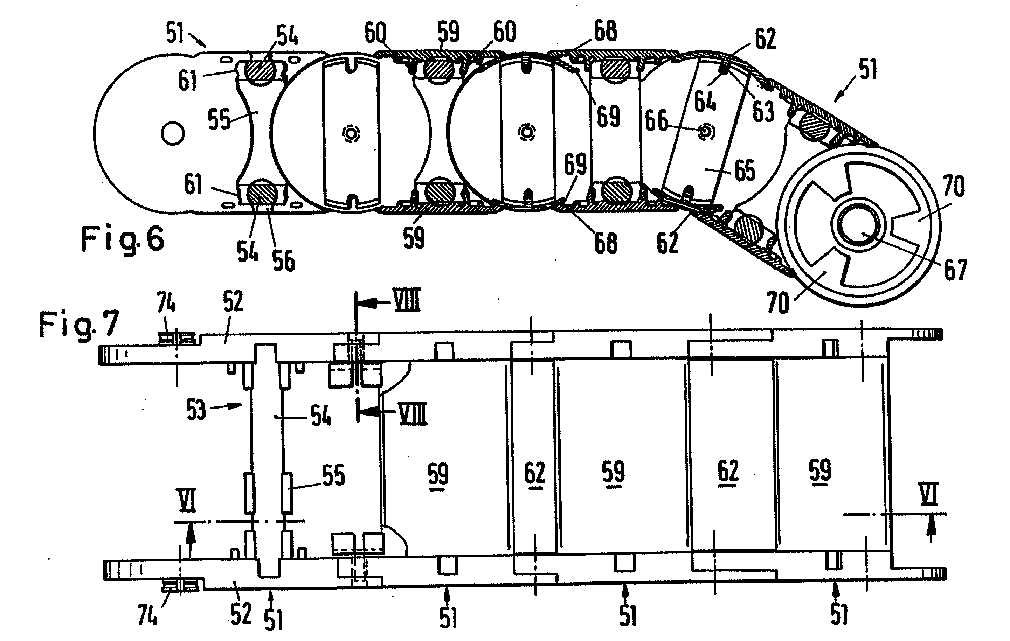

Fig. 6 Vier Kettenglieder der zweiten Lösungsvariante entlang der Linie VI-VI in Fig. 7 geschnitten;

Fig. 7 dieselben Kettenglieder gemäß Fig. 6 in Draufsicht;

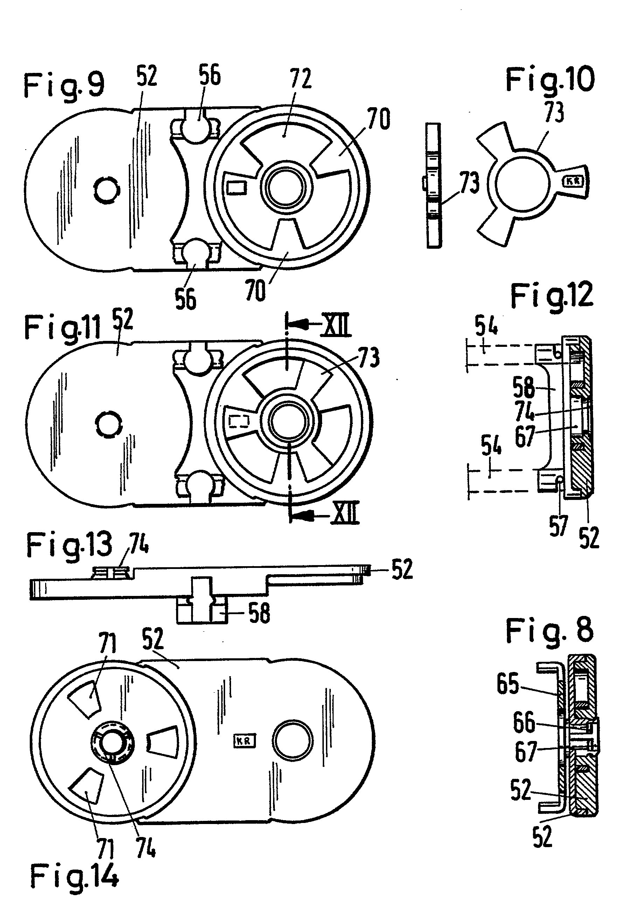

Fig. 8 eine Gelenkverbindung der Kettenlaschen entlang der Linie VIII-VIII in Fig. 7 geschnitten;

Fig. 9 ein Kettenglied in Seintenansicht;

Fig. 10 ein sternförmiges Konstruktionsteil zum Verändern des Krümmungsradius in Ansicht und in Seitenansicht;

Fig. 11 eine Kettenlasche mit dem eingelegten Konstruktionsteil zur Veränderung des Krümmungsradius in Ansicht;

Fig. 12 die Kettenlasche gemäß Fig. 11 entlang der Linie XII-XII geschnitten;

Fig. 13 die Kettenlasche gemäß den Fig. 9 und 11 in Draufsicht;

Fig. 14 die Kettenlasche gemäß den Fig. 9 und 11 von der anderen Seite her gesehen in Ansicht.

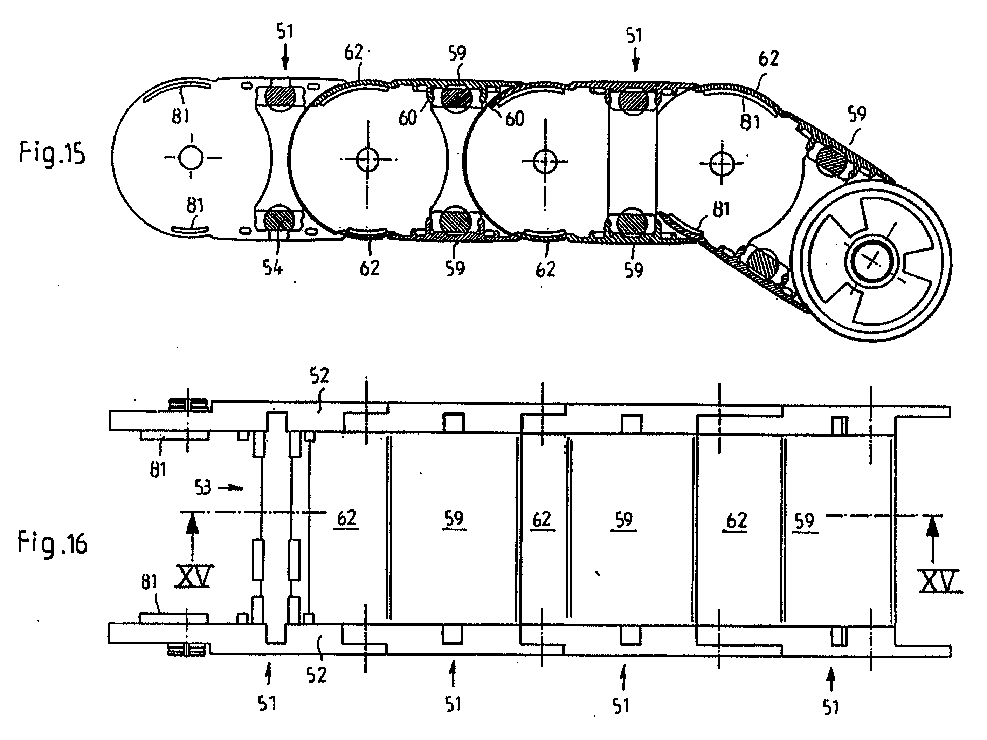

Fig. 15 vier Kettenglieder der dritten Lösungsvariante entlang der Linie XV-XV in Fig. 16 geschnitten;

Fig. 16 dieselben Kettenglieder gemäß Fig. 15 in Draufsicht.

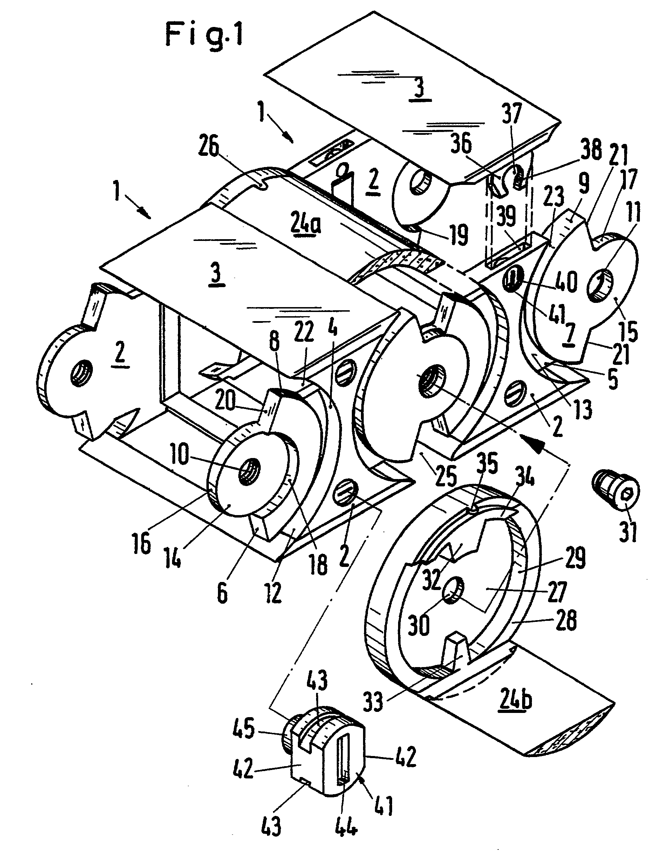

In den Fig. 1 bis 5 ist eine erste Lösungsvariante der Erfindung dargestellt.

Die Fig. 1 zeigt Kettenglieder 1, die symmetrisch aus Kettenlaschen 2 und Stegen 3 aufgebaut sind. Für den Aufbau dieser Energieführungskette ist also nur ein Typ Kettenlaschen 2 und ein Typ Stege 3 erforderlich. Die Kettenlaschen 2 weisen endseitig rückspringende Abschnitte 4,5 auf, an deren Boden Erhebungen 6,7 angeordnet sind, deren Umfangsflächen 8,9 konzentrisch zu den Schwenkachsen der Kettenglieder verlaufen, welche von den Mittelachsen der Bohrungen 10,11 definiert werden. An die Umfangsflächen 8,9 grenzen Nuten 12,13 an.

Die Kettenlaschen 2 weisen stirnseitig Überlappungsbereiche 14,15 auf, die zu den Schwenkachsen der Kettenglieder konzentrische Außenflächen 16,17 haben, die innerhalb komplementär geformter Gegenflächen 18,19 benachbarter Kettenglieder angeordnet sind, wobei die Überlappungsbereiche 14,15 einander überlappen. Die radialen Begrenzungen der Umfangsflächen 8,9 bilden Anschläge 20,21, wobei jeder Anschlag 20 in der gleichen Ebene wie der Anschlag 21 eines benachbarten Kettengliedes schwenkbar ist.

Die Kettenlaschen 2 haben randseitig zu den Schwenkachsen konzentrische Ausnehmungen 22,23, in die außen kreiszylindrische Deckplatten 24a und 24b eingesetzt sind, wobei sie die Spalte 25 zwischen benachbarten Kettengliedern abdecken. Die Deckplatten 24a und 24b bilden Nut-Feder-Verbindungen 26 mit an den Kettenlaschen befestigten Deckeln 27.

Die bei gekrümmter Energieführungskette außen angeordnete Deckplatte 24a (in der Fig. 1 die obere) hat einen kreisringausschnittförmigen Querschnitt. Die bei gekrümmter Energieführungskette innen angeordnete Deckplatte 24b (in der Fig. 1 die untere) hat einen kreissegmentförmigen Querschnitt.

Die Deckel 27 verbinden benachbarte Kettenlaschen 2, indem sie mit ihrem Rand 28 die Umfangsflächen 8,9 der Erhebungen 6,7 umschließen. Dabei wird der Rand 28 in die Nuten 12,13 eingeschoben, so daß der Deckel 27 außen bündig mit den Kettenlaschen 2 abschließt und mit der Innenfläche 29 seines Randes 28 die Umfangsflächen 8,9 abstützt. Zur Befestigung des Deckels 27 ist eine zentrale Bohrung 30 vorgesehen, in die ein Gelenkbolzen 31, der den Deckel 27 mit den Überlappungsbereichen 14,15 verbindet, einsetzbar ist. Der Gelenkbolzen 31 dient nicht der Kraftübertragung, sondern nur der Zentrierung und ist daher entlastet. Er kann als Schraube, Bundbolzen mit Sicherungsring oder als Schnappverbindung ausgebildet sein.

Der Deckel 27 weist Anschläge 32,33 auf, wobei die Abmessung des Anschlages 32 die Vorspannung der Kettenglieder in gestreckter Lage bestimmen und wobei der Anschlag 33 den Krümmungsradius der Energieführungskette bestimmt, indem er die kleinstmögliche Distanz zwischen den Anschlägen 20,21 festlegt. Der Deckel 27 weist außerdem einen zweiten Rand 34 zur Auflage der Deckplatten 24 auf, auf dem die Feder 35 der Nut-Feder-Verbindung 26 angeordnet ist.

Die Stege 3 sind über Befestigungslaschen 36 lösbar mit den Kettenlaschen 2 verbunden, welche Befestigungslaschen 36 Ausnehmungen 37 haben, die mit Hinterschneidungen 38 versehen sind. Die Kettenlaschen weisen Aufnahmen 39 für die Befestigungslaschen 36 auf, wobei in Querbohrungen 40 der Aufnahmen 39 Befestigungsbolzen 41 eingesetzt sind. Die Befestigungsbolzen 41 haben Flachseiten 42 und weisen an ihrem Außenumfang Nuten 43 auf. Zu ihrer Betätigung sind sie auf einer Stirnseite mit einem Schraubschlitz 44 versehen. Auf der anderen Stirnseite tragen sie einen Führungsstift 45. Das Zusammenwirken der Befestigungsbolzen 41 mit den Befestigungslaschen 36 wird weiter unten anhand der Fig. 4a bis 5d erläutert.

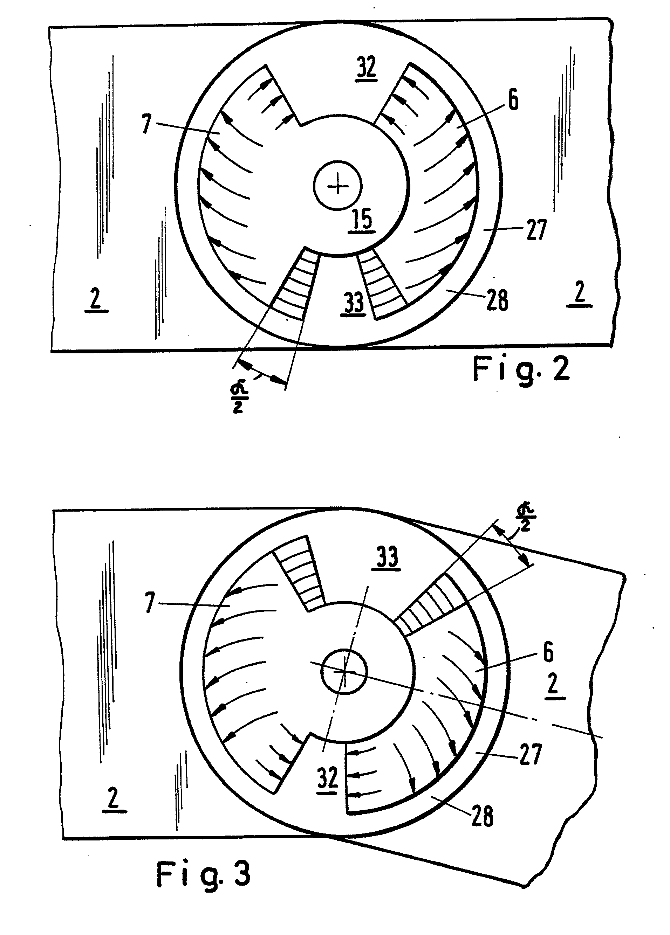

Wie die Pfeile in der Fig. 2 zeigen, werden die Spannungen zwischen gestreckten Kettenlaschen 2 relativ gleichmäßig über die Erhebungen 6,7 in den Rand 28 und den Anschlag 32 des Deckels 27 eingeleitet, so daß der verwendete Werkstoff einer relativ geringen Beanspruchung unterliegt. Durch Schwenken der rechten Kettenlasche 2 um den Winkel erhält man die in Fig. 3 dargestellt Konfiguration, bei der die Kraft von den Anschlägen 21,22 in den Rand 28 und den Anschlag 33 des Deckels 27 eingeleitet wird.

Die Fig. 4a und 5a zeigen die Querbohrung 40 in der Kettenlasche 2 vor dem Einsetzen des Befestigungsbolzens 41. An ihrem Grund ist die Querbohrung 40 mit einer Führungsbohrung 46 für den Führungsstift 45 des Befestigungsbolzens 41 versehen. An ihrem Innenumfang weist die Querbohrung 40 Nasen 47 und Anschläge 48 auf.

Die Fig. 4b und 5b zeigen die Querbohrung 40 mit eingesetztem Befestigungsbolzen 41, dessen Flachseiten 42 gerade durch die Öffnung zwischen den Nasen 47 rückbar sind und dabei eine Winkelstellung von 45° zur Einführachse der Befestigungslaschen 36 haben. Der Führungsstift 45 ist in die Führungsbohrung 46 eingedrückt. In dieser Stellung kann der Befestigungsbolzen 41 aus der Querbohrung 40 herausgenommen bzw. eingesetzt werden.

Die Fig. 4c und 5c zeigen den Befestigungsbolzen 41, der an seinem Schraubschlitz 44 in eine unverlierbare Stellung gedreht ist, in der die Nasen 47 teilweise in die Nuten 43 des Befestigungsbolzens 41 eingreifen und in der die Flachseiten 42 an den Anschlägen 48 anliegen, wodurch ein selbsttätiges Weiterdrehen verhindert wird. In dieser Position kann die Befestigungslasche 36 in die Aufnahme 39 eingeschoben werden, weil ihre Ausnehmung 37 genau über die Flachseiten 42 des Befestigungsbolzens 41 passt.

Die Fig. 4d und 5d zeigen den Befestigungsbolzen 41 in der Verriegelungsstellung in die er aus der zuvor gezeigten Lage durch eine Drehung entgegen dem Uhrzeigersinn gelangt. In der Verriegelungsstellung greifen die Nasen 47 ebenfalls teilweise in die Nut 43 ein und liegen die Flachseiten 42 an den Anschlägen 48 an, wodurch der Befestigungsbolzen 41 gesichert ist. Der ballige Teil des Befestigungsbolzens ist nunmehr in der Aufnahme 39 quer zur Verschieberichtung der Befestigungslasche 36 angeordnet, wodurch er die Befestigungslasche 36 an dem Hinterschnitt 38 in der Aufnahme 39 blockieren kann. Durch leichtes Aufspreizen der Befestigungslasche 36 kann eine Federkraft erzeugt werden, die den Befestigungsbolzen 41 in der Verriegelungsstellung sichert.

In den Fig. 6 bis 14 ist eine zweite Lösungsvariante dargestellt worden.

Jedes Kettenglied 51 besteht aus zwei gleich ausgebildeten Kettenlaschen 52 und einem diese miteinander verbindenden Steg 53, der wiederum aus einer oberen und unteren Traverse 54 und Trennstegen 55 gebildet ist.

Die Traversen 54 bestehen aus auf zwei Seiten abgeflachten und an den beiden anderen Seiten abgerundeten Stäben, die in hinterschnittene Ausnehmungen 56 der Kettenlaschen 52 eingesetzt und durch Drehung um 90° in diesen fixiert werden können. Dabei greifen die Traversen 54 mit Stiften 57 in Schlitze von angespritzten Endstücken 58 ein, damit die Kettenlaschen nicht nach außen von den Traversen abgezogen werden können.

Die Trennstege 55 sind an den Traversen 54 fixiert und dienen gleichzeitig als Tragelemente für Querplatten 59 die mit angeformten Federzügen 60 in Längsrillen 61 an den Trennstegen 55 eingreifen.

Die zwischen den Querplatten 59 noch freibleibenden Spalte zwischen benachbarten Kettengliedern 51 sind mit kreiszylindrischen Deckplatten 62 verschlossen. Die beiden Deckplatten 62 zum Verschließen eines Spaltes sind mit angeformten Klemmnasen 63 in Schlitzen von Auflagestützen 65 befestigt, die ihrerseits mit einer Schnappachse 66 in einer Gelenkbohrung 67 der Kettenlaschen 52 gelagert ist.

Zur Zentrierung der Deckplatten 62 in den Spalten zwischen den Querplatten 59 sind sowohl an den Rändern der Querplatten 59 als auch an den Rändern der Deckplatten 62 sich hintergreifende Anschlagkanten 68 und 69 angespritzt, wobei die Anschlagkanten 68 der Querplatten 59 nach innen und die Anschlagkanten 69 der Deckplatten 62 nach außen gerichtet sind. Mit den Anschlagkanten 68,69 werden die Deckplatten 62 immer mittig zu den Spalten ausgerichtet, und zwar in der gestreckten Lage mit den Anschlagkanten 69 an der im Krümmungsbereich innenliegenden, schmaleren Deckplatte 62 (Fig. 6) und in der gekrümmten Lage mit den Anschlagkanten 69 an der im Krümmungsbereich außenliegenden, breiteren Deckplatte 62.

Der Anschlagmechanismus zwischen den Kettengliedern dieser zweiten Lösungsvariante zur Begrenzung des Krümmungsradius auf den Biegeradius der empfindlichsten Energieleitung besteht aus in der gleichen Ebene liegenden Anschlägen 70 an einem Ende jeder Kettenlasche 52, die zu der einen Seite hin gerichtet sind und aus entsprechenden Anschlägen 71 am anderen Ende jeder Kettenlasche 52, die zu der anderen Seite hin gerichtet sind. Zwischen den Anschlägen 70,71 sind Ausnehmungen 72 angeordnet, deren Größe in Abhängigkeit von der Breite der Anschläge 70,71 die Größe des gegenseitigen Schwenkwinkels bestimmt. Die konstruktive Ausbildung und Funktion des Anschlagemechanismus ergibt sich aus den Fig. 9 bis 14.

Die Größe der Anschläge 70,71 wird zweckmäßig so ausgelegt, daß sie einen maximalen Schwenkwinkel zwischen zwei benachbarten Kettengliedern 51 ermöglicht. Dieser maximale Schwenkwinkel kann dann durch das Einlegen von sternförmigen Segmentstücken 73 (Fig. 10) verkleinert und damit auf den jeweiligen Anwendungsfall abgestimmt werden.

Die Verbindung von zwei Kettenlaschen 52 erfolgt mit einer Schnappachse 74, die gleichzeitig als Aufnahme für die Schnappachse 66 der Deckplatten 62 dient.

In den Fig. 15 und 16 ist eine dritte Lösungsvariante dargestellt worden, deren Kettenglieder 51 hinsichtlich ihrer konstruktiven Ausführung mit der vorstehend beschriebenen, zweiten Lösungsvariante übereinstimmen, so daß insoweit auf die vorstehende Beschreibung Bezug genommen werden kann.

Eine weitere technische Vereinfachung besteht jedoch darin, daß die einem Kettenglied 51 zuzuordnenden Querplatten 59 und Deckplatten 62 einteilig ausgebildet sind. Deshalb können bei dieser Lösungsvariante die selbständigen Auflagestützen 65 für die Deckplatten 62 entfallen. Sie sind ersetzt worden durch an die Kettenlaschen 52 angeformte Stützleisten 81. Besondere konstruktive Maßnahmen zur Zentrierung der Querplatten 59 mit den angeformten Deckplatten 62 in den Spalten benachbarter Kettenglieder sind ebenfalls nicht erforderlich.

Bezugszeichenliste

1 Kettenglied
2 Kettenlasche
3 Steg
4 Abschnitt
5 Abschnitt
6 Erhebung
7 Erhebung
8 Umfangsfläche
9 Umfangsfläche
10 Bohrung
11 Bohrung
12 Nut
13 Nut
14 Überlappungsbereich
15 Überlappungsbereich
16 Außenfläche
17 Außenfläche
18 Gegenfläche
19 Gegenfläche
20 Anschlag
21 Anschlag
22 Ausnehmung
23 Ausnehmung
24a Deckplatte
24b Deckplatte
25 Spalt
26 Nut-Feder-Verbindung
27 Deckel
28 Rand
29 Innenfläche
30 Bohrung
31 Gelenkbolzen
32 Anschlag
33 Anschlag
34 Rand
35 Feder
36 Befestigungslasche
37 Ausnehmung
38 Hinterschneidung
39 Aufnahme
40 Querbohrung
41 Befestigungsbolzen
42 Flachseite
43 Nut
44 Schraubschlitz
45 Führungsstift
46 Führungsbohrung
47 Nase
48 Anschlag
51 Kettenglied
52 Kettenlasche
53 Steg
54 Traverse
55 Trennsteg
56 Ausnehmung
57 Stift
58 Endstück
59 Querplatte
60 Federzunge
61 Längsrille
62 Deckplatte
63 Klemmnase
64 Schlitz
65 Auflagestütze
66 Schnappachse
67 Gelenkbohrung
68 Anschlagkante
69 Anschlagkante
70 Anschlag
71 Anschlag
72 Ausnehmung
73 Segmentstück
74 Schnappachse
81 Stützleisten

**Patentansprüche**

1. Energieführungskette für die Zufuhr von Verbrauchsmitteln aller Art durch Leitungen von einem ortsfesten Anschluß zu einem beweglichen Verbraucher, mit schwenkbar miteinander verbundenen Kettengliedern (1) aus Kettenlaschen (2) und diese verbindenden Stegen (3), die Innenräume zur Aufnahme der Leitungen abgrenzen, wobei die Schwenkbewegung benachbarter Kettenglieder (1) durch radiale Anschläge (20, 21) begrenzt ist, die in einer Ebene mit entsprechenden Anschlägen (20, 21) benachbarter Kettenglieder (1) schwenkbar sind, dadurch gekennzeichnet,
daß die Kettenlaschen (2) randseitig zu den Schwenkachsen konzentrische Ausnehmungen (22, 23) haben, in die außen kreiszylindrische Deckplatten (24a, 24b) eingesetzt sind, welche Spalte (25) zwischen den Stegen (3) benachbarte Kettenglieder (1) abdecken,
daß benachbarte Kettenlaschen (2) durch Deckel (27) verbunden sind, welche seitlich mit einem konzentrischen Rand (28) in die Ausnehmungen (22, 23) und diese miteinander verbindende, gebogene und zu den Schwenkachsen konzentrische Nuten (12, 13) eingreifen und
daß die Deckel (27) Vorsprünge (32, 33) haben, die zwischen den Anschlägen (20, 21) benachbarter Kettenglieder (1) angeordnet sind.

2. Energieführungskette nach Anspruch 1, dadurch gekennzeichnet, daß die benachbarten Kettenlaschen (2) einander mit Überlappungsbereichen (14, 15) überlappen und daß die Überlappungsbereiche (14, 15) und Deckel (27) zu den Schwenkachsen der Kettenglieder (1) konzentrische Bohrungen (10, 11, 30) zur Aufnahme von Gelenkbolzen (31) haben.

3. Energieführungskette nach einem der Ansprüche 1 und 2, dadurch gekennzeichnet, daß die Deckel (27) mit den Deckplatten (24) Nut-Feder-Verbindungen (26) bilden.

4. Energieführungskette nach einem der Ansprüche 1 bis 3, dadurch gekennzeichnet, daß die Deckel (27) Ränder (34) zur Auflage der Deckplatten (24) haben.

5. Energieführungskette nach einem der Ansprüche 1 bis 4, dadurch gekennzeichnet, daß die Deckplatten (24a) einen kreisringabschnittförmigen Querschnitt haben.

6. Energieführungskette nach einem der Ansprüche 1 bis 4, dadurch gekennzeichnet, daß die Deckplatten (24b) einen kreissegmentförmigen Querschnitt haben.

7. Energieführungskette nach einem der Ansprüche 1 bis 6, dadurch gekennzeichnet, daß die Kettenglieder (1) zwischen den Deckplatten (24) mit ein- oder beidseitig lösbaren Stegen (3) abgedeckt sind, die bis zu den Deckplatten (24a, 24b) reichen.

8. Energieführungskette nach Anspruch 7, dadurch gekennzeichnet, daß die Stege (3) Befestigungslaschen (36) haben, deren Ausnehmungen (37) mit Hinterschneidungen (38) versehen sind,
daß die Kettenlaschen (2) Aufnahmen (39) zum Einstecken der Befestigungslaschen (36) haben und
daß die Aufnahmen (39) Querbohrungen (40) aufweisen, in die Befestigungsbolzen (41) eingesetzt sind, über deren abgeflachte Seiten die Befestigungslaschen (36) mit ihren Ausnehmungen (37) schiebbar sind und die nach einer Drehung die Hinterschneidungen (38) in den Befestigungslaschen (36) und Nasen (47) in den Querbohrungen (40) hintergreifen.

9. Energieführungskette nach Anspruch 8, dadurch gekennzeichnet, daß die Befestigungsbolzen (41) an ihrem Außenumfang eine Nut (43) haben, in die Nasen (47) am Innenumfang der Querbohrungen (40) eingreifen.

10. Energieführungskette nach Anspruch 8, dadurch gekennzeichnet, daß abgeflachte Seiten der Befestigungsbolzen (41) zum Verschieben über die Nasen (47) eine Winkelstellung von 45° zur Einführachse der Befestigungslaschen (36) haben.

11. Energieführungskette für die Zufuhr von Verbrauchsmitteln aller Art durch Leitungen von einem ortsfesten Anschluß zu einem beweglichen Verbraucher mit schwenkbar miteinander verbundenen Kettengliedern (51) aus Kettenlaschen (52) und diese verbindenden Stegen (53), die Innenräume zur Aufnahme der Leitungen abgrenzen, wobei die Schwenkbewegung benachbarter Kettenglieder (51) durch radiale Anschläge (70) begrenzt ist, die in einer Ebene mit entsprechenden Anschlägen (71) benachbarter Kettenglieder (51) schwenkbar sind, dadurch gekennzeichnet,
daß die Kettenglieder (51) mit auf die Stege (53) aufsteckbaren oder von diesen gebildeten Querplatten (59) abgedeckt sind,
daß zwischen den Querplatten (59) benachbarter Kettenglieder (51) außen und innen kreiszylindrische Deckplatten (62) eingesetzt sind, die der Abdeckung der Spalte zwischen den Querplatten (59) benachbarter Kettenglieder (51) dienen, wobei die Deckplatten (62) eine konzentrisch zu den Schwenkachsen bzw. Gelenkachsen ausgebildete Krümmung aufweisen und mit radial zu den Gelenkachsen verlaufenden Auflagestützen (65) verbunden sind und
daß die Auflagestützen (65) mit einer zentralen Achse in einer Gelenkbohrung (67) der Kettenlaschen (52) gelagert sind.

12. Energieführungskette nach Anspruch 11, dadurch gekennzeichnet, daß die Querplatten (59) aus extrudierten Kunststoffprofilen mit angeformten Federzungen (60) zum Aufstecken auf die Stege (53) oder zwischen diesen angeordneten Trennstegen (45) hergestellt sind.

13. Energieführungskette nach Anspruch 11, dadurch gekennzeichnet, daß die Deckplatten (62) aus extrudierten Kunststoffprofilen mit angeformten Klemmnasen (63) hergestellt sind.

14. Energieführungskette nach den Ansprüchen 11 bis 13, dadurch gekennzeichnet, daß an den Rändern der Querplatten (59) und der Deckplatten (62) sich hintergreifende Anschlagkanten (68, 69) angeformt sind.

15. Energieführungskette nach Anspruch 11, dadurch gekennzeichnet, daß die Auflagestützen (65) mit einer Schnappachse (66) schwenkbar in der Gelenkbohrung (67) befestigt sind.

16. Energieführungskette nach Anspruch 15, dadurch gekennzeichnet, daß die Schnappachsen (66) der Auflagestützen (65) gleichzeitig die Gelenkachsen für benachbarte Kettenglieder (51) bilden.

17. Energieführungskette für die Zufuhr von Verbrauchsmitteln aller Art durch Leitungen von einem ortsfesten Anschluß zu einem beweglichen Verbraucher mit schwenkbar miteinander verbundenen Kettengliedern (51) aus Kettenlaschen (52) und diese verbindenden Stege (53), die Innenräume zur Aufnahme der Leitungen abgrenzen, wobei die Kettenglieder (51) von mit den Stegen (53) verbundenen Querplatten (59) abgedeckt und an die Querplatten (59) längsseitig außen und innen kreiszylindrische Deckplatten (62) angeformt sind, die der Abdeckung der Spalte zwischen den Querplatten (59) benachbarter Kettenglieder (51) dienen, wobei die Deckplatten (62) eine konzentrisch zu den Schwenkachsen bzw. Gelenkachsen ausgebildete Krümmung aufweisen und wobei die Schwenkbewegung benachbarter Kettenglieder (51) durch radiale Anschläge (70) begrenzt ist, die in einer Ebene mit entsprechenden Anschlägen (71) benachbarter Kettenglieder (51) schwenkbar sind, dadurch gekennzeichnet,

daß die Deckplatten (62) an nur einer Längsseite der Querplatten (59) angeformt sind und daß die Querplatten (59) und Deckplatten (62) aus extrudierten Kunststoffprofilen mit angeformten Federzungen (60) zum Aufstecken auf die Stege (53) oder zwischen diesen angeordneten Trennstegen (55) hergestellt sind.

18. Energieführungskette nach Anspruch 17, dadurch gekennzeichnet, daß an den Kettenlaschen (52) auf der Innenseite Stützleisten (81) für die Deckplatten (62) angeformt sind.

**Claims**

1. A chain-link energy line carrier for supplying energy of all kinds through cables, wires, hoses or the like, from a fixed connection to a movable consumer, comprising pivotally interconnected chain links (1) consisting of link plates (2) and webs (3) connecting the same and defining interior spaces to receive the cables, wires, hoses or the like, the pivoting movement of adjacent chain links (1) being limited by radial abutments (20, 21) pivotable in co-planar relationship with corresponding abutments (20, 21) of adjacent chain links (1), characterised in that the link plates (2) have at the edges recesses (22, 23) which are concentric to the pivot axes and into which are inserted cover plates (24a, 24b) of externally circular-cylindrical shape, said cover plates (24a, 24b) covering gaps (25) between the webs (3) of adjacent chain links (1),

in that adjacent chain links (2) are connected by covers (27) which engage laterally by a concentric edge (28) into the recesses (22, 23) and curved grooves (12, 13) connecting said recesses (22, 23) and concentric to the pivot axes, and

in that the covers (27) have projections (32, 33) which are disposed between the abutments (20, 21) of adjacent chain links (1).

2. A chain-link energy line carrier according to claim 1, characterised in that the adjacent link plates (2) overlap one another by overlap zones (14, 15) and in that the overlap zones (14, 15) and covers (27) have boreholes (10, 11, 30) concentric to the pivot axes of the chain links (1) to receive articulation pins (31).

3. A chain-link energy line carrier according to claim 1 or 2, characterised in that the covers (27) together with the cover plates (24) form tongue and groove connections (26).

4. A chain-link energy line carrier according to any one of claims 1 to 3, characterised in that the covers (27) have edges (34) to support the cover plates (24).

5. A chain-link energy line carrier according to any one of claims 1 to 4, characterised in that the cover plates (24a) have a cross-section in the form of a portion of a circular ring.

6. A chain-link energy line carrier according to any one of claims 1 to 4, characterised in that the cover plates (24b) have a cross-section in the form of a segment of a circle.

7. A chain-link energy line carrier according to any one of claims 1 to 6, characterised in that the chain links (1) are covered between the cover plates (24) by webs (3) which are releasable on one or both sides and which extend as far as the cover plates (24a, 24b).

8. A chain-link energy line carrier according to claim 7, characterised in that the webs (3) have fixing lugs (36), the recesses (37) of which are provided with undercuts (38),

in that the link plates (2) have holders (39) for the insertion of the fixing lugs (36) and

in that the holders (39) have transverse bores (40) into which fixing studs (41) are inserted, over the flattened sides of which the fixing lugs (36) can be slid by their recesses (37) and which, after rotation, engage behind the undercuts (38) in the fixing lugs (36) and noses (47) in the transverse bores (40).

9. A chain-link energy line carrier according to claim 8, characterised in that the fixing studs (41) have a groove (43) at their outer periphery, noses (47) on the inner periphery of the transverse bores (46) engaging in said grooves (43).

10. A chain-link energy line carrier according to claim 8, characterised in that flattened sides of the fixing studs (41) have an angular position of 45° to the entry axis of the fixing lugs (36) for movement over the noses (47).

11. A chain-link energy line carrier for supplying energy of all kinds through cables, lines, hoses or the like, from a fixed connection to a movable consumer, comprising pivotally interconnected chain links (51) consisting of link plates (52) and webs (53) connecting the same and defining interior spaces to receive the cables, wires, hoses or the like, the pivoting movement of adjacent chain links (51) being limited by radial abutments (70) pivotable in co-planar relationship with corresponding abutments (71) of adjacent chain links (51), characterised in that the chain links (51) are covered by transverse plates (59) adapted to be fitted on to or formed by the webs (53),

in that cover plates (62) of circular cylindrical shape externally and internally are inserted between the transverse plates (59) of adjacent chain links (51) and serve to cover the gaps between the transverse plates (59) of adjacent chain links (51), the cover plates (62) having a curvature concentric to the pivot axes or articulation pins and being connected to supports (65) extending radially to the articulation pins and
in that the supports (65) are mounted by a central pin in an articulation borehole (67) in the link plates (52).

12. A chain-link energy line carrier according to claim 11, characterised in that the transverse plates (59) are made from extruded plastics profiles with integrally moulded spring tongues (60) for fitting on to the webs (53) or partition webs (45) disposed between them.

13. A chain-link energy line carrier according to claim 11, characterised in that the cover plates (62) are made from extruded plastics profiles with integrally moulded clamping noses (63).

14. A chain-link energy line carrier according to claims 11 to 13, characterised in that abutment edges (68, 69) engaging behind one another are integrally moulded on the edges of the transverse plates (59) and of the cover plates (62).

15. A chain-link energy line carrier according to claim 11, characterised in that the supports (65) are pivotally secured in the articulation borehole (67) by a snap pin (66).

16. A chain-link energy line carrier according to claim 15, characterised in that the snap pins (66) of the supports (65) simultaneously form the articulation axes for adjacent chain links (51).

17. A chain-link energy line carrier for supplying energy of all kinds through cables, wires, lines, hoses or the like, from a fixed connection to a movable consumer, comprising pivotally interconnected chain links (51) consisting of link plates (52) and webs (53) connecting the same and defining interior spaces to receive the cables, wires, hoses or the like, the chain links (51) being covered by transverse plates (59) connected to the webs (53) and cover plates (62) of circular-cylindrical shape externally and internally at the longitudinal sides are integrally moulded on the transverse plates (59) and serve to cover the gaps between the transverse plates (59) of adjacent chain links (51), the cover plates (62) having a curvature concentric to the pivot axes or articulation pins, the pivoting movement of adjacent chain links (51) being limited by radial stops (70) pivotable in co-planar relationship with corresponding abutments (71) of adjacent chain links (51), characterised in that
the cover plates (62) are integrally moulded on only one longitudinal side of the transverse plates (59) and in that the transverse plates (59) and cover plates (62) are made from extruded plastics profiles with integrally moulded spring tongues (60) for fitting on to the webs (53) or partition webs (55) disposed between the latter.

18. A chain-link energy line carrier according to claim 17, characterised in that support strips (81) for the cover plates (62) are integrally moulded on the inside of the link plates (52).

## Revendications

1. Chaîne de conduites d'énergie pour l'amenée de matières consommables de tous types, par des conduites, d'un raccord à poste fixe à un appareil consommateur mobile, comportant des maillons (1) reliés entre eux à articulation et constitués de flasques (2) reliés par des entretoises (3), ces éléments délimitant des volumes intérieurs pour le logement des conduites, le mouvement d'articulation de maillons (1) voisins étant limité par des butées radiales (20, 21) pivotant dans un plan où se trouvent des butées correspondantes (20, 21) des maillons (1) voisins, caractérisée en ce
que les flasques (2) présentent en bordure des évidement (22, 23), coaxiaux aux axes de pivotement dans lesquels sont engagées des plaques de recouvrement à surface extérieure cylindrique (24a, 24b), ces plaques recouvrant les intervalles (25) entre les entretoises (3) de maillons (1) voisins, que des flasques (2) voisins sont reliés par des couvercles (27) qui s'engagent latéralement par une bordure coaxiale (28) dans les évidements (22, 23) et dans les rainures en arc (12, 13) reliant les évidements et coaxiales aux axes d'articulation et que les couvercles (27) comportent des saillies (32, 33) disposées entre les butées (20, 21) de maillons (1) voisins.

2. Chaîne de conduites d'énergie selon la revendication 1, caractérisée en ce que les flasques (2) voisins se chevauchent par des zones de recouvrement (14, 15) et en ce que les zones de recouvrement (14, 15) et les couvercles (27) présentent des alésages (10, 11, 30) coaxiaux aux axes d'articulation des maillons (1) pour recevoir des broches d'articulation (31).

3. Chaîne de conduites d'énergie selon l'une des revendications 1 et 2, caractérisée en ce que les couvercles (27) forment des assemblages à rainure et languette (26) avec les plaques de recouvrement (24).

4. Chaîne de conduite d'énergie selon l'une des revendications 1 à 3, caractérisée en ce que les couvercles (27) comportent des bords (34) pour l'appui des plaques de recouvrement (24).

5. Chaîne de conduites d'énergie selon l'une des revendications 1 à 4, caractérisée en ce que les plaques de recouvrement (24a) présentent une section transversale en forme de segment d'anneau circulaire.

6. Chaîne de conduites d'énergie selon l'une des revendications 1 à 4, caractérisée en ce que les plaques de recouvrement (24b) présentent une section transversale en forme de segment circulaire.

7. Chaîne de conduites d'énergie selon l'une des revendications 1 à 6, caractérisée en ce que les maillons (1) sont recouvert, entre les plaques de recouvrement (24), par des entretoises (3) amovibles d'un côté ou des deux côtés, ces entretoises allant jusqu'aux plaques de recouvrement (24a, 24b).

8. Chaîne de conduites d'énergie selon la revendication 7, caractérisée en ce que les entretoises (3) comportent des pattes de fixation (36) présentant des évidements (37) avec des épaulement (38), que les flasques (2) comportent des logements (39) pour l'introduction des pattes de fixation (36) et que les logements (39) présentent des trous transversaux (40) dans lesquels sont introduites des broches de fixation (41) munies de méplats sur lesquels les pattes de fixation (36) glissent par leurs évidements (37), ces broches engrenant, après rotation, avec les épaulements (38) des pattes de fixation (36) et avec des saillies (47) des trous tranversaux (40).

9. Chaîne de conduites d'énergie selon la revendication 8, caractérisée en ce que les broches de fixation (41) présentent une rainure (43) sur leur surface latérale extérieure, les saillies (47) de la surface latérale intérieure de trou transversaux (40) engrenant dans cette rainure.

10. Chaîne de conduites d'énergie selon la revendication 8, caractérisée en ce que les méplats des broches de fixation (41) ont, pour coulisser sur les saillies (47), une position angulaire de 45° par rapport à l'axe d'introduction des pattes de fixation (36).

11. Chaîne de conduites d'énergie pour l'amenée de matières consommables de tous types, par des conduites d'un raccord à poste fixe à un appareil consommateur mobile, comportant des maillons (51) reliés entre eux à articulation et constitués de flasques (52) reliés par des entretoises (53), ces éléments délimitant des volumes intérieurs pour le logement des conduites, le mouvement d'articulation de maillons (51) voisins étant limité par des butées radiales (70) pivotant dans un plan où se trouvent des butées correspondantes (71) des maillons (51) voisins, caractérisée en ce

que les maillons (51) sont recouverts par des plaques transversales (59) s'engageant sur les entretoises (53) ou constituées par ces entretoises, que des plaques de recouvrement (62) cylindriques extérieurement et intérieurement sont insérées entre les plaques transversales (59) de maillons (51) voisins, ces plaques de recouvrement servant à recouvrir l'intervalle entre les plaques transversales (59) des maillons (51) voisin, les plaques de recouvrement (62) présentant une courbure coaxiale aux axes de pivotement ou d'articulation et étant assemblées avec des étais (65) s'étendant radialement par rapport aux axes d'articulation et

que les étais (65) sont montés à rotation par un axe central dans un alésage d'articulation (67) des flasques (52).

12. Chaîne de conduites d'énergie selon la revendication 11, caractérisée en ce que les plaques transversales (59) sont réalisées à partir de profilés extrudés en matière plastique avec des languettes élastiques moulées (60) pour l'engagement sur les entretoises (53) ou sur des barres séparatrices (55) disposées entre celles-ci.

13. Chaîne de conduites d'énergie selon la revendication 11, caractérisée en ce que les plaques de recouvrement (62) sont réalisées à partir de profilés extrudés en matière plastique avec des saillies de blocage moulées (63).

14. Chaîne de conduites d'énergie selon les revendications 11 à 13, caractérisée en ce que des bordures de butée (68, 69) qui s'enclenchent sont formées sur les bords des plaques transversales (59) et des plaques de recouvrement (62).

15. Chaîne de conduites d'énergie selon la revendication 11, caractérisée en ce que les étais (65) sont montés à rotation dans l'alésage d'articulation (67) par un axe à enclenchement (66).

16. Chaîne de conduites d'énergie selon la revendication 15, caractérisée en ce que les axes à enclenchement (66) des étais (65) constituent en même temps les axes d'articulation de maillons (51) voisins.

17. Chaîne de conduites d'énergie pour l'amenée de matières consommables de tous types, par des conduites, d'un raccord à poste fixe à un appareil consommateur mobile, comportant des maillons (51) reliés entre eux à articulation et constitués de flasques (52) reliés par des entretoises (53), ces éléments délimitant des volumes intérieurs pour le logement des conduites, les maillons (51) étant recouverts par des plaques transversales (59) assemblées avec les entretoises (53), des plaques de recouvrement cylindriques extérieurement et intérieurement (62) étant formées le long des plaques transversales (59) en servant à recouvrir l'intervalle entre les plaques transversales (59) de maillons (51) voisins, les plaques de recouvrement (62) présentant une courbure coaxiale aux axes de pivotement ou d'articulation, le mouvement d'articulation de maillons (51) voisins étant limité par des butées radiales (70) pivotant dans un plan ou se trouvent des butées correspondantes (71) des maillons (51) voisins, caractérisée en ce

que les plaques de recouvrement (62) ne sont formées que sur un côté longitudinal des plaques transversales (59) et que les plaques transversales (59) et les plaques de recouvrement (62) sont réalisées à partir de profilés extrudés en matière plastique avec des languettes élastiques moulées (60) pour l'engagement sur les entretoises (53) ou sur des barres séparatrices (55) disposées entre celles-ci.

18. Chaîne de conduites d'énergie selon la revendication 17, caractérisée en ce que des barrettes d'appui (81) des plaques de recouvrement (62) sont formées du côté intérieur, sur les flasques (52).

Fig.1

Fig. 2

Fig. 3

EP 0 246 502 B1

Fig.4a
Fig.5a
Fig.4b
Fig.5b
Fig.4c
Fig.5c
Fig.4d
Fig.5d

Fig. 6

Fig. 7

EP 0 246 502 B1

Fig.9

Fig.10

Fig.11

Fig.12

Fig.13

Fig. 8

Fig.14

Fig.15

Fig.16

EP 0 246 502 B1